# EUROPÄISCHE PATENTANMELDUNG

(11) **EP 0 871 103 A1**
(43) Veröffentlichungstag der Anmeldung: **14.10.1998**
(21) Anmeldenummer: 98106307.6
(22) Anmeldetag: 07.04.1998
(51) Int. Cl.: G05D 25/02, H05B 37/02, H05B 39/04, H05B 41/392, H01J 13/00

(54) **Beleuchtungs-Steuereinrichtung**

(30) Priorität: 11.04.1997 DE 29706523 U
(71) Anmelder: TRILUX-LENZE GmbH & Co. KG, D-59759 Arnsberg (DE); Leax Limited, London EC 4 CE (GB)
(72) Erfinder: Hasemann, Fred, Dr.-Ing., 59759 Arnsberg (DE); Mertens, Ferdinand, Dipl.-Ing., 59755 Arnsberg (DE); Nattkemper, Guido, Dipl.-Phys., 59425 Unna (DE)
(74) Vertreter: Selting, Günther, Dipl.-Ing.

(57) **Zusammenfassung**

Die Beleuchtungs-Steuereinrichtung enthält eine Kontrolleinheit (CU), die über Steuerleitungen (10) mindestens ein Beleuchtungsgerät (LU) in Abhängigkeit von dem Signal eines Leuchtstärkesensors (D2) oder eines anderen Sensors steuert. Um manuell die volle Kunstlicht-Beleuchtungsstärke oder eine andere Steuerfunktion zwangsweise einstellen zu können, wird der Netzschalter (S1) mehrere Male kurz hintereinander betätigt. Die Kontrolleinheit (CU) enthält eine Erkennungsschaltung (12), die diese Betätigung erkennt und veranlaßt, daß das Beleuchtungsgerät (LU) nun nicht mehr auf dem betreffenden Sensor (D2) reagiert, sondern die vorgegebene Steuerfunktion ausführt.

## Beschreibung

Die Erfindung betrifft eine Beleuchtungs-Steuereinrichtung mit einer Kontrolleinheit, die mindestens ein Beleuchtungsgerät in Abhängigkeit von extern zugeführten Signalen steuert.

Bekannt sind Beleuchtungs-Steuereinrichtungen, bei denen die künstliche Beleuchtung in Abhängigkeit von externen Signalen gesteuert wird. Im einfachsten Fall erfolgt eine manuelle Steuerung über einen Dimmer. Zur Steuerung der künstlichen Beleuchtung kann auch ein Lichtmeßfühler verwendet werden, der die Beleuchtungsstärke in dem zu beleuchtenden Raum oder die Tageslicht-Beleuchtungsstärke außerhalb dieses Raumes mißt und in Abhängigkeit hiervon die Beleuchtungsstärke der künstlichen Beleuchtung so einstellt, daß eine gewünschte Gesamt-Beleuchtungsstärke in dem beleuchteten Raum oder in Teilen dieses Raumes, z.B. an Bildschirm-Arbeitsplätzen, entsteht. Solche Beleuchtungs-Steuereinrichtungen, mit denen die Beleuchtungsstärke gesteuert oder geregelt werden kann, haben den Vorteil einer erheblichen Energieeinsparung, weil das Licht nicht nur ein- und ausgeschaltet, sondern entsprechend den örtlichen und zeitlichen Gegebenenheiten die künstliche Beleuchtungsstärke variiert werden kann. Ferner kann die Beleuchtungsstärke durch Personen-Anwesenheitsdetektion gesteuert werden, wobei in dem Fall, daß sich in einem bestimmten Bereich keine Person befindet, in diesem Bereich die Beleuchtungsstärke verringert wird, während die Beleuchtungsstärke erhöht wird, wenn eine Person sich in diesem Bereich aufhält.

Die bekannten Beleuchtungs-Steuereinrichtungen, die durch Betätigung eines Netzschalters eingestellt werden, haben den Nachteil, daß sie nur die vorgesehene Steuerungs- oder Regelungsfunktion durchführen und daß individuelle manuelle Beeinflussungen der künstlichen Beleuchtungsstärke häufig nicht möglich oder mit erheblichen Schwierigkeiten verbunden sind. Es gibt Situationen, in denen die automatische Beleuchtungsregelung außer Funktion gesetzt werden soll, beispielsweise wenn vorübergehend die volle Beleuchtungsstärke (100 %) eingestellt werden soll, oder wenn die Beleuchtungsstärke in dem betreffenden Raum auf einen geringen Wert (10 %) reduziert werden soll, z.B. bei einem Diavortrag. In solchen Fällen erlauben die bekannten Beleuchtungs-Steuereinrichtungen zwar entsprechende Eingriffe in die Kontrolleinheit, jedoch ist dies mit Schwierigkeiten verbunden, weil ein spezieller Schalter oder Sensor der Kontrolleinheit betätigt werden muß.

Der Erfindung liegt die Aufgabe zugrunde, eine Beleuchtungs-Steuereinrichtung zu schaffen, die auf einfache Weise die manuelle Ausführung einer vorgegebenen Steuerfunktion ermöglicht.

Die Lösung dieser Aufgabe erfolgt erfindungsgemäß mit den Merkmalen des Anspruchs 1.

Bei der erfindungsgemäßen Beleuchtungs-Steuereinrichtung enthält die Kontrolleinheit eine Erkennungsschaltung, die eine mehrmalige Betätigung des Netzschalters innerhalb einer vorgegebenen Zeitspanne erkennt und daraufhin eine vorgegebene Steuerfunktion für das Beleuchtungsgerät ausführt. Dadurch ist es möglich, den Netzschalter nicht nur zum Ein- und Ausschalten der Beleuchtung zu benutzen, sondern auch als Signalgeber für die Ausführung einer bestimmten Steuerfunktion, beispielsweise die Einschaltung der vollen Beleuchtungsstärke oder eines vorgegebenen Prozentwertes der vollen Beleuchtungsstärke. Am Netzschalter kann die Beleuchtung in üblicher Weise eingeschaltet werden. Wird jedoch der Netzschalter in dichter Folge mehrmals betätigt, so erkennt hieraus die Kontrolleinheit, daß nicht der automatische Betrieb durchgeführt werden soll, bei dem die Beleuchtung durch Sensoren gesteuert wird, sondern ein manueller Betrieb, bei dem die Funktion der Sensoren abgeschaltet ist.

Ein wesentlicher Vorteil der Beleuchtungs-Steuereinrichtung besteht darin, daß an zentraler Stelle, nämlich am Netzschalter, eine übergeordnete Steuerfunktion eingegebenen werden kann. Der Netzschalter kann also dazu benutzt werden, durch Schaltvorgänge eine bestimmte Beleuchtungsstärke einzustellen. Diese Schaltvorgänge stellen einen Befehl dar, der von der Erkennungsschaltung in der Kontrolleinheit erkannt wird. Die Schaltvorgänge modulieren die Versorgungsspannung, mit der die Kontrolleinheit und die Beleuchtungsgeräte betrieben werden. Daher sind keine zusätzlichen Leitungsführungen vom Netzschalter zur Kontrolleinheit erforderlich. Die Signale werden über die ohnehin vorhandenen Netzleitungen übertragen.

Im Rahmen der Erfindung ist es auch möglich, unterschiedliche Signale für verschiedenartige Steuerfunktionen vom Netzschalter zur Kontrolleinheit zu übertragen. Jedes dieser Signale ist definiert durch einen bestimmten Rhythmus des Ein- und Ausschaltens des Netzschalters innerhalb der vorgegebenen Zeitspanne. Dieses Ein- und Ausschalten des Netzschalters muß nicht notwendigerweise manuell erfolgen, jedoch wird es in jedem Fall manuell ausgelöst. Es ist möglich, den Netzschalter mit einem Impulsgeber auszustatten, der auf Tastendruck eine entsprechende Impulsfolge automatisch erzeugt.

Die Erfindung eignet sich insbesondere für solche Steuereinrichtungen, bei denen mehrere Kontrolleinheiten vorhanden sind, die jeweils von individuellen Sensoren gesteuert sind. Beispielsweise können in einem Großraumbüro mehrere Kontrolleinheiten vorgesehen sein, die jeweils die Beleuchtungsstärke in einem bestimmten Bereich steuern oder regeln. Sämtliche Kontrolleinheiten werden durch einen einzigen Netzschalter eingeschaltet. Mit diesem Netzschalter kann ein Impuls-Code-Signal erzeugt werden, durch welches die individuellen Einstellungen sämtlicher Kontrolleinheiten außer Funktion gesetzt werden, um beispielsweise die volle Raumbeleuchtung (100%) einzuschalten.

Ein weiterer Vorteil der Erfindung besteht darin, daß bestehende Beleuchtungsanlagen auf einfache Weise nachgerüstet werden können, ohne daß zusätzliche Leitungen verlegt werden müssen.

Weitere Vorteile und Merkmale der Erfindung ergeben sich aus der nachfolgenden Beschreibung eines Ausführungsbeispiels sowie den Unteransprüchen.

Im folgenden wird ein Ausführungsbeispiel unter Bezugnahme auf die Zeichnungen näher erläutert.

Es zeigen:
- Fig. 1: ein schematisches Schaltbild der Beleuchtungs-Steuereinrichtung, und
- Fig. 2: Zeitdiagramme der Betätigung des Netzschalters, und der daraufhin erzeugten Kunstlicht-Beleuchtungsstärke.

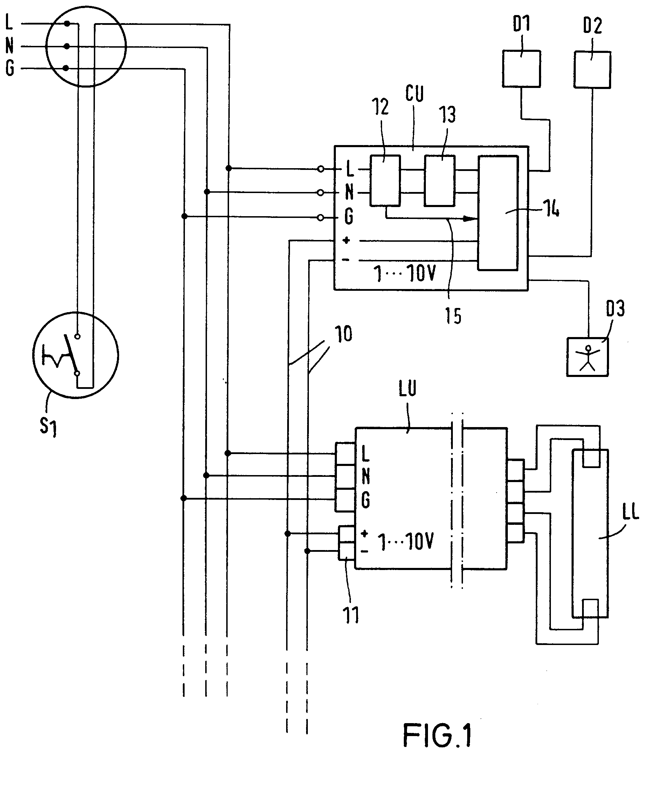

In Figur 1 ist das übliche Wechselspannungs-Versorgungsnetz mit den Leitungen L,N und G dargestellt. In die Phasenleitung L ist ein Netzschalter S1 geschaltet, mit dem die nachfolgenden Verbraucher eingeschaltet werden können. N bildet den Nulleiter und G die Masse- oder Erdleitung. Der Netzschalter S1 dient zum Ein- und Ausschalten der nachfolgenden Verbraucher.

An die Netzleitungen sind mehrere Kontrolleinheiten CU angeschlossen, von denen in Figur 1 eine dargestellt ist. An die Kontrolleinheit CU sind Sensoren D1,D2,D3 angeschlossen. D1 ist bei diesem Beispiel ein Dimmer oder Schalter, D2 ein Leuchtstärkefühler und D3 ein Personendetektor.

An die Netzleitungen ist ferner ein Beleuchtungsgerät LU angeschlossen, bei dem es sich hier um ein elektronisches Vorschaltgerät für den Betrieb einer oder mehrerer Leuchtstofflampen LL handelt. Von der Kontrolleinheit CU führen Steuerleitungen 10 zu einem Steuereingang 11 des Beleuchtungsgerätes LU. Diese Steuerleitungen 10 übertragen eine Steuerspannung, bei der es sich um eine Gleichspannung handelt, die Werte zwischen 1 und 10 V annehmen kann. Beträgt die Steuerspannung an den Steuerleitungen 10 10 V, so bedeutet dies, daß die volle Beleuchtungsstärke (100 %) eingestellt werden soll. Beträgt die Steuerspannung dagegen 1 V, so wird die Beleuchtungsstärke der Leuchtstofflampe LL auf 1 % reduziert. Die Kontrolleinheit CU kann über die Steuerleitungen 10 mehrere Beleuchtungsgeräte LU gleichzeitig steuern.

An der Steuereinheit CU kann derjenige Sensor D1,D2,D3 ausgewählt werden, der die Steuerung der angeschlossenen Beleuchtungsgeräte LU beeinflußt. Nachfolgend wird angenommen, daß der Leuchtstärkesensor D2 ausgewählt wurde, so daß die Kontrolleinheit CU die Beleuchtungsgeräte LU derart steuert, daß eine gewünschte Gesamt-Beleuchtungsstärke E, die sich aus der Tageslicht-Beleuchtungsstärke und der Kunstlicht-Beleuchtungsstärke ergibt, konstant eingehalten wird.

Die Kontrolleinheit CU enthält eine an die Netzleitungen angeschlossene Erkennungsschaltung 12, sowie eine Versorgungsschaltung 13, die aus der Netzspannung 230 V und 50 Hz eine Versorgungsgleichspannung für die Steuerschaltung 14 erzeugt. Die Erkennungsschaltung 12 erkennt eine Betätigung des Netzschalters S1 und liefert daraufhin ein entsprechendes Signal über die Steuerleitung 15 an die Steuerschaltung 14. Damit die Erkennungsschaltung auch bei ausgeschaltetem Netzschalter S1 funktionsfähig ist, enthält die Kontrolleinheit eine (nicht dargestellte) Hilfsstromquelle in Form einer Batterie oder eines Kondensators, die die Funktionsbereitschaft der Erkennungsschaltung bei ausgeschaltetem Netzschalter mindestens vorübergehend aufrechterhält.

Die Erkennungsschaltung 12 erkennt, ob in einer vorgegebenen Zeitspanne T1, die beispielsweise 2 Sekunden beträgt, eine mindestens zweimalige Betätigung des Netzschalters S1 erfolgt. Sowohl der Einschaltvorgang als auch der Ausschaltvorgang des Netzschalters bildet eine Betätigung. Wird der Netzschalter also innerhalb der Zeitspanne T1 mindestens einmal ausgeschaltet und eingeschaltet, so liefert die Erkennungsschaltung 12 über die Steuerleitung 15 ein entsprechendes Signal an die Steuerschaltung 14, die daraufhin die Sensoren D1,D2,D3 außer Funktion setzt und eine vorgegebene Steuerfunktion ausführt. Diese vorgegebene Steuerfunktion besteht bei diesem Beispiel darin, die Kunstlicht-Beleuchtungsstärke E_{K} auf 100 % einzustellen. Die Kontrolleinheit CU kann ferner einen Zeitgeber enthalten, der die vorgegebene Steuerfunktion auf eine festgelegte Zeitdauer T2 von beispielsweise einer Minute begrenzt und anschließend wieder den automatischen Betrieb einstellt.

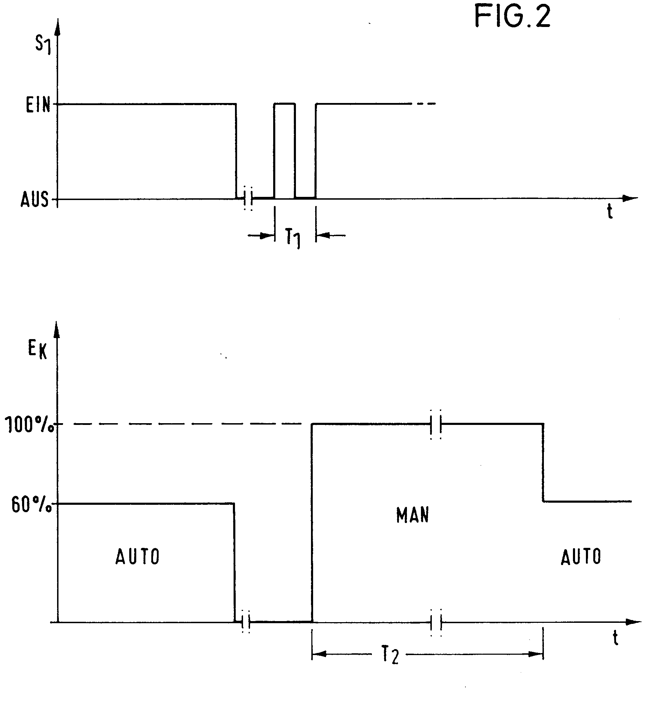

In Figur 2 ist die Stellung des Netzschalters S1 über der Zeit t dargestellt. Das untere Diagramm enthält die zugehörige künstliche Beleuchtungsstärke E_{K}.

Zunächst erfolgt eine automatische Regelung der künstlichen Beleuchtungsstärke, beispielsweise unter Steuerung durch den Leuchtstärkefühler D2. Wenn Tageslicht einfällt, reicht eine künstliche Beleuchtungsstärke von 60 %, um die erforderliche Gesamt-Beleuchtungsstärke zu erreichen. Wenn dann der Schalter S1 auf Aus gestellt wird, wird die Beleuchtung abgeschaltet. Erfolgt innerhalb einer vorgegebenen Zeitspanne T1 von 2 Sekunden eine mehrmalige Betätigung des Schalters S1, wird dies von der Erkennungsschaltung 12 (Figur 1) erkannt und daraufhin wird von automatischem Betrieb AUTO auf Handbetrieb MAN bzw. Zwangssteuerung umgeschaltet. Die Kunstlicht-Beleuchtungsstärke E_{K} wird auf 100 % eingestellt. Dieser Zustand wird für eine festgelegte Zeitdauer T2 aufrechterhalten und anschließend erfolgt wieder der Übergang auf automatischen Betrieb AUTO, bei dem die Regelung durch den betreffenden Sensor D2 erfolgt. Alternativ hierzu kann der Übergang von manuellem Betrieb MAN auf automatischen Betrieb AUTO dadurch erreicht werden, daß bei manuellem Betrieb eine mindestens zweimalige Betätigung des Netzschalters S1 innerhalb der vorgegebenen Zeitspanne erfolgt.

Es ist auch möglich, von automatischem Betrieb unmittelbar auf Handbetrieb oder Zwangssteuerung überzugehen. In diesem Fall werden bei der Betätigung des Netzschalters S1 die Beleuchtungsgeräte LU kurzzeitig ausgeschaltet und wieder eingeschaltet. Danach erfolgt dann der Übergang auf die vorgegebene Steuerfunktion (100 %).

## Patentansprüche

1. Beleuchtungs-Steuereinrichtung mit einer Kontrolleinheit (CU), die mindestens ein Beleuchtungsgerät (LU) in Abhängigkeit von extern zugeführten Signalen steuert, wobei die Kontrolleinheit (CU) über einen Netzschalter (S1) mit Netzleitungen (LNG) zur Stromversorgung verbunden ist,
**dadurch gekennzeichnet,**
daß die Kontrolleinheit (CU) eine Erkennungsschaltung (12) enthält, die eine mehrmalige Betätigung des Netzschalters (S1) innerhalb einer vorgegebenen Zeitspanne (T1) erkennt und daraufhin eine vorgegebene Steuerfunktion für das Beleuchtungsgerät (LU) ausführt.

2. Beleuchtungs-Steuereinrichtung nach Anspruch 1, dadurch gekennzeichnet, daß die Kontrolleinheit (CU) eine Hilfsstromquelle enthält, die die Funktionsbereitschaft der Erkennungsschaltung (12) bei ausgeschaltetem Netzschalter (S1) mindestens vorübergehend aufrechterhält.

3. Beleuchtungs-Steuereinrichtung nach Anspruch 1 oder 2, dadurch gekennzeichnet, daß ein Zeitgeber vorgesehen ist, der die vorgegebene Steuerfunktion auf eine festgelegte Zeitdauer (T2) begrenzt.

4. Beleuchtungs-Steuereinrichtung nach einem der Ansprüche 1 bis 3, dadurch gekennzeichnet, daß die vorgegebene Steuerfunktion in der Einschaltung der maximalen Helligkeit (100 %) am Beleuchtungsgerät (LU) besteht.

5. Beleuchtungs-Steuereinrichtung nach einem der Ansprüche 1 bis 4, dadurch gekennzeichnet, daß die vorgegebene Zeitspanne (T1) nicht länger ist als 2 Sekunden.

6. Beleuchtungs-Steuereinrichtung nach einem der Ansprüche 1 bis 5, dadurch gekennzeichnet, daß das Beleuchtungsgerät (LU) ein Vorschaltgerät ist, an das mindestens eine Leuchtstofflampe (LL) angeschlossen ist.

7. Beleuchtungs-Steuereinrichtung nach einem der Ansprüche 1 bis 6, dadurch gekennzeichnet, daß an das Steuergerät (CU) ein Schalter (D1) oder ein Leuchtstärkesensor (D2) oder ein Personendetektor (D3) oder ein Programmgeber zur Lieferung der extern zugeführten Signale angeschlossen ist.

8. Beleuchtungs-Steuereinrichtung nach einem der Ansprüche 1 bis 7, dadurch gekennzeichnet, daß der Netzschalter (S1) einen Impulsgeber aufweist, der bei Betätigung die Netzstromversorgung entsprechend einem vorgegebenen Impulsmuster innerhalb der vorgegebenen Zeitspanne (T1) unterbricht.

9. Beleuchtungs-Steuereinrichtung nach einem der Ansprüche 1 bis 8, dadurch gekennzeichnet, daß die Erkennungsschaltung (12) derart ausgebildet ist, daß sie unterschiedliche Impulsmuster der Unterbrechung der Stromversorgung erkennt und in Abhängigkeit von dem erkannten Impulsmuster eine von mehreren vorgegebenen Steuerfunktionen ausführt.
